# EUROPEAN PATENT APPLICATION

(11) **EP 4 764 839 A1**
(43) Date of publication of application: **24.06.2026**
(21) Application number: 24220873.4
(22) Date of filing: 18.12.2024
(51) Int. Cl.: G06F 9/30, G06F 9/38, G06F 15/173, G06F 15/80

(54) **3D IN-PIPELINE PRIVATE SCRATCHPAD MEMORY FOR SIMT COMPUTE CORES**

(71) Applicant: Imec VZW, 3001 Leuven (BE)
(72) Inventor: LENORMAND, Erwan, 4000 Liège (BE); HABER, Tom, 3560 Lummen (BE); PERUMKUNNIL, Manu Komalan, 3000 Leuven (BE); MEJDRICH, Eric, 3001 Heverlee (BE)
(74) Representative: Winger

(57) **Abstract**

A processor core (1) of the SIMT type and a related method of operation are disclosed. The processor core comprises frontend circuitry (10), a plurality of lanes (20a-f), a multi-banked and arbitration-free scratchpad memory (40), and an interconnect (50) to couple active ones of the plurality of lanes to different ones of the scratchpad memory banks. There are at least as many banks as lanes in the processor core. Each lane comprises a thread-private register file (21a-f) and address generation logic (22a-f) to independently calculate an effective address of an operand within the scratchpad memory. An execution pipeline of the processor core, associated with the thread-parallel execution of vector memory instructions, comprises at least the address generation logic of the different lanes, the interconnect, and the different banks as pipeline components. The processor core is implemented as a stack of dies (2a, 2b) including the frontend circuitry and the plurality of lanes on a first die (2a) and the scratchpad memory on a second die (2b).

## Description

### Field of the invention

The present invention relates to the field of computer processors, and more specifically to Single Instruction Multiple Threads (SIMT) compute cores.

### Background of the invention

Single instruction, multiple threads (SIMT) stands for an execution model in which multiple threads execute the same instruction stream in lockstep. A thread can be understood as a continuous stream of instructions that are to be executed on a corresponding stream of data. The SIMT execution model, widely implemented in graphical processing units (GPUs), leverages thread-level parallelism to offer the advantage of efficient parallel processing.

A processor core of the SIMT type therefore provides hardware support for the simultaneous execution of multiple threads. The threads receive the same instruction stream and execute in lockstep. In a SIMT core, a thread ID uniquely identifies the different threads, thereby allowing it to process distinct data while executing identical instructions. Moreover, threads are frequently gathered into a thread group (also called waves or warps) during the scheduling, dispatch and execution phases of the processor core.

The high degree of thread parallelism offered by SIMT processor cores enables fast switching to other eligible warps whenever a previous warp stalls, thus saturating the functional units of the backend and sustaining high overall throughput as much as possible. Memory access latencies for cache misses as well as register dependency latencies between subsequent instructions of a warp are effectively hidden that way. Typically, SIMT processor cores hide latencies well if they operate in a throughput-bound mode rather than in a latency-bound mode. Yet, memory bandwidth limitations can lead to under-utilization of the functional units.

In contrast to vector processors which implement the single instruction, multiple data execution model, SIMT cores operate on multiple threads in parallel and allow the execution paths of different threads within a thread group to diverge and reconverge at a later moment in time. This way, the instruction stream of a thread group can be fractured when executing branches of a computer code, e.g. an if-else statement. In a SIMT core, individual threads of a thread group can be masked as active or inactive, which affects their execution behavior. The instructions are allowed to run for all active threads, whereas inactive threads are blocked from executing these instructions. Furthermore, the data layout in vector processors and SIMT cores is different. Register files and system memory for vector processor architectures must provide large vector registers and memory blocks that can be accessed through a single register number or single memory address. While vector processors operate on data vectors as fundamental inputs, i.e. data elements/operands packed into vectors of a maximum length, there is no such restriction present in SIMT cores in which the different threads are allowed to access memory independently. The coalescing of several thread accesses to global memory into more coarse-grained transactions may reduce the memory-related data traffic for SIMT processor cores but diverging, not fully-coalesced memory accesses (i.e., not lined up and/or not aligned with transaction boundaries) still cause a significant decrease in warp throughput.

A difficulty in SIMT processor core architecture is the underutilization of backend execution units and the reduction of processor core throughput which is often caused by irregular memory access patterns into a shared memory resource. It arises first and foremost in the context of data-dominated applications like artificial intelligence, numerical analysis employing sparse data structures, etc., where the locality of reference is rather poor and memory accesses take a more random character that is hard to predict. Consequently, the cache miss rate increases. Moreover, multiple threads attempting to simultaneously access the same memory locations of the shared memory resource results in bank conflicts that need to be resolved. This leads not only to inefficient use of the available memory bandwidth but also slows down the rate at which the compute data is loaded into the registers of the processor core. Accordingly, the attainable warp throughput drops and no longer matches the arithmetic peak throughput offered by the execution units of the SIMT processor core. Eventually, this stalls the pipeline of the processor core for longer periods of time due to operand starvation and leaves execution units of its backend circuitry idling. To saturate the execution units, a higher warp occupancy related to arithmetic instructions would be required. However, the limited capacity of the register file quickly causes significant amount of register pressure if the warp occupancy was increased, incurring even more data traffic with respect to global memory.

Therefore, there is a need for improved SIMT-type processor cores which offer a high degree of utilization of the available execution resources and memory bandwidth in the event of irregular memory access.

### Summary of the invention

It is an object of embodiments of the present invention to enable SIMT processor cores to utilize thread-shared memory resources and core execution units more efficiently when confronted with irregular memory access patterns.

This objective is accomplished by SIMT processor cores and related operating methods in accordance with the claims.

In one aspect, the present invention relates to a processor core of the SIMT type, or SIMT core, which comprises frontend circuitry for dispatching instructions to be executed by the processor core, a plurality of lanes for thread-parallel execution of instructions issued by the frontend circuitry, a multi-banked and arbitration-free scratchpad memory, and an interconnect to couple active ones of the plurality of lanes to different ones of the scratchpad memory banks. This means that no two active lanes are coupled to the same bank of the scratchpad memory, but each active lane is coupled to a distinct bank of the scratchpad memory. Each lane of the SIMT core has a thread-private register file and the scratchpad memory is configured to store operands or thread-related data that is originally present in the different thread-private register files. There are at least as many banks of scratchpad memory as there are lanes in the SIMT core. Address generation logic, comprised by each lane of the SIMT core, is configured to independently calculate, in accordance with a vector memory instruction received from the frontend circuitry, an effective address within the scratchpad memory. The effective address describes the physical location in the scratchpad memory where the operand or thread-related data element is to be written, modified or read. Each vector memory instruction is specifying a memory operation to be performed by all the active lanes, e.g. a vector load or vector store operation as coalesced memory operations that involve a group of operands, as well as a corresponding register in the thread-private register file of each active lane that is targeted by the memory operation. The interconnect is configured to transfer the groups of operands involved in each vector memory instruction between the thread-private register files of the different active lanes and corresponding locations in the scratchpad memory to which the effective addresses are pointing. The scratchpad memory banks are simultaneously accessible to perform the memory operation specified by the vector memory instruction in parallel at the locations pointed by the effective addresses. The execution pipeline of the SIMT core that is associated with the thread-parallel execution of vector memory instructions issued by the frontend circuitry is referred to as fully pipelined vectorial scratchpad memory unit and comprises at least the address generation logic of the different lanes, the interconnect, and the different banks of the scratchpad memory as pipeline components. Furthermore, the SIMT core is implemented as a stack of dies including at least a first die and a second die. The first die comprises the frontend circuitry and the plurality of lanes, and the second die comprises the scratchpad memory.

It is an advantage of embodiments of the invention that the scratchpad memory is an arbitration-free memory resource that requires only little or less complex control circuitry. This saves die area to the benefit of larger scratchpad memory capacity, simplifies the interconnect and routing of control signals, and results in memory dies that are more suitable for integration with the underlying logic die of the SIMT processor core.

It is an advantage of embodiments of the invention that the SIMT processor core is implemented on two vertically stacked dies: a memory die and a core logic die. The dies provide different layers for circuit implementation, i.e. different circuit layers, which can be fabricated using conventional planar processes. Memory banks of the scratchpad memory can be duplicated and densely integrated on the memory die while core logic such as backend execution units can be duplicated on the core logic die. In embodiments of the invention, face-to-face hybrid Cu-Cu bonding may be used to vertically integrate the memory die with the core logic die. In the case of additional intermediate layers, stacked between the core logic die and the memory die, or in the case of a scratchpad memory implemented on multiple distinct dies, a vertical integration and die stacking technique based on through-silicon vias (TSVs) may be used. The resulting 3D structure is a very compact one and allows for direct routing with shorter interconnections and wire-related latencies between the scratchpad memory as thread-shared memory resource on the memory die and the thread execution hardware and register files on the core die. Moreover, owing to the 3D-integrated structure, a larger area on the memory die is available for storage and/or an increased port count. The related gain in memory capacity of the 3D structure compared to 2D scratchpad memory implementations may be a factor four to eight, or even larger.

In embodiments, the interconnect allows memory access requests of each core lane to reach any one of the scratchpad memory banks and each bank can be used interchangeably by threads running on the SIMT core to load/store thread-related data, e.g., operands of the thread-private register files. Therefore, the scratchpad can be used as a shared memory source for the different threads and memory requests originating from multiple active lanes of the SIMT core can be coalesced into a vector-like memory operation that gathers a group of operands for which memory access is sought in parallel. In this sense, integrating the interconnect and the scratchpad memory into the execution pipeline of the SIMT core enables vectorial memory operations and the scratchpad memory behaves like a vectorial memory unit. However, not vectors of operands or thread-related data elements are stored as basic units of data in a specific location within the scratchpad memory, which requires just a single memory address, but the different operands or data elements of the active thread group are each stored individually at different locations, using different effective memory addresses.

In embodiments, the address generation logic of each lane of the SIMT core enables the lane-specific computation of effective addresses in the scratchpad memory, which is a prerequisite for independent memory access requests by each active lane. The effective address calculation typically requires two operands as input, at least one of which is located in and fetched from the thread-private register file.

In embodiments, the banks of the scratchpad memory are thread-aligned. This means that the number of lanes, L, and the number of banks in the scratchpad memory, M, are chosen such that L ≥ M. This allows each lane to independently access the scratchpad memory in the absence of bank conflicts, which makes good use of the available memory bandwidth and preserves the high degree of thread-level parallelism offered by SIMT cores.

In embodiments, the banks of the scratchpad memory are simultaneously accessible. This maximizes thread parallelism and throughput of the SIMT core.

In embodiments, fully pipelining the components of the vectorial scratchpad memory unit enables higher throughputs of the SIMT core, whereas the relatively shallow pipeline depth requires initial filling delays of only a few core clock cycles.

In embodiments, the different banks composing the scratchpad memory may be further subdivided into sub-banks. Routing consecutive memory requests to different sub-banks may further increase the bandwidth of the scratchpad memory, thus allowing higher throughputs of vector instructions. The use of sub-banks may also be beneficial to obtaining shorter and/or more uniform access delays across the banks of the scratchpad memory.

In embodiments, a memory operation to be performed by all the active lanes running the vector memory instruction may include a load operation, a store operation, atomic operations such as atomic increments or decrements. The register (e.g. register number) in the thread-private register file of each active lane that is targeted by the memory operation may be a source register for store operations or a destination register for load operations. The vector instruction may further specify a source register in the thread-private register file of each active lane that contains an address operand needed for computing the effective memory address. Atomic operations also specify source and destination registers and are typically decomposed into a sequence of fundamental load-and-store operations during which the relevant storage locations in the scratchpad memory are protected, e.g. locked.

In embodiments, each bank of the scratchpad memory may have N simultaneously accessible ports, and the interconnect may be configured to route at most N memory access request signals per bank and per core clock cycle. This means that the interconnect inherently limits the number of memory requests that are admitted to the scratchpad memory to the maximum number of requests that the scratchpad memory can handle in parallel in each core clock cycle. Matching the interconnect bandwidth with the maximum bandwidth of the scratchpad memory has the advantage that bank accesses are naturally serialized and bank conflicts due to a lack of available memory ports can be detected and dealt with at an earlier stage of the execution pipeline that is associated with the vectorial scratchpad memory unit.

In embodiments, data moved into the scratchpad memory may remain there until it is overwritten.

In embodiments, the processor core may further comprise an instruction buffer configured to manage a separate memory mask with respect to each vector memory instruction present in the instruction buffer, each memory mask keeping track of yet unserved memory accesses to the scratchpad memory. Therefore, the memory masks allow precise tracking of pending memory accesses in case of bank conflicts and present an efficient way of handling bank conflicts within the available core logic of the SIMT core's frontend circuitry.

In embodiments, the frontend circuitry may be configured to issue vector memory instructions present in the instruction buffer in accordance with the corresponding memory mask, including determining a set of active lanes based on the memory mask and issuing the same vector memory instruction multiple times until all the memory accesses to the scratchpad memory tracked by the memory mask have been served successfully. This ensures that all pending memory accesses have been served successfully before the corresponding vector memory instruction is retired.

In embodiments, the frontend circuitry may be configured to issue at most N vector memory instructions per core clock cycle, N being the number of simultaneously accessible ports within each bank of the scratchpad memory. This naturally matches the instruction issue rate to the memory access capability of the scratchpad memory and presents an efficient way of preventing bank conflicts already within the available core logic of the SIMT core's frontend circuitry.

In embodiments, the frontend circuitry may be configured to dispatch, in a single core clock cycle, one or multiple vector memory instructions for thread-parallel execution by active ones of the processor core lanes in accordance with an instruction sequencing mechanism. This allows flexible scheduling of vector memory instructions. The frontend circuitry may include a dispatch unit for issuing, in a single core clock cycle, one or multiple vector memory instructions for thread-parallel execution by the active lanes of the SIMT core.

In embodiments, each lane may further comprise request generation logic to independently generate a request signal for accessing the scratchpad memory at the effective address in accordance with the vector memory instruction received from the frontend circuitry, wherein the request generation logic is another pipeline component of the fully pipelined vectorial scratchpad memory unit. The request signal with respect to each active lane may correspond to or be encapsulated into a memory transaction request signal for that lane, which specifies the access type (e.g. read, write, atomic), the address where the data to be moved is stored in the scratchpad memory, the data that is moved, the requestor (e.g. lane number).

In embodiments, the interconnect may comprise a first crossbar for routing memory access request signals from the different active lanes to the corresponding banks of the scratchpad memory and a second crossbar for routing return signals from accessed banks of the scratchpad memory to the corresponding requesting lanes, wherein the first and second crossbar are separate pipeline components of the fully pipelined vectorial scratchpad memory unit. The dual crossbar design allows overlapping of memory access request signal routing from the active lanes towards the scratchpad memory and response/return signal routing from the scratchpad memory towards the active lanes. The overlapped memory access request signals and response/return signals relate to different vector memory instructions and reflect instruction level parallelism of the SIMT core that is obtained in addition to the thread-level parallelism. The set of active lanes corresponding to the overlapped memory access request signals and response/return signals may be different.

In embodiments, the interconnect may be configured to detect and resolve colliding memory access requests to the scratchpad memory. Colliding memory requests may be resolved by prioritizing the forwarding of the memory access requests according to a predetermined prioritization rule. This prioritization rule may be based on a lane number, thread ID, request routing distance, or any similar unique identifier or request latency measure. Therefore, the prioritized memory request is the only memory request out of the set of colliding memory requests that will be routed to the targeted bank and serviced as the result of executing the vector memory instruction. The remaining memory requests of the set of colliding memory requests are not prioritized and thus not serviced as part of the current execution of the vector memory instruction. Nonetheless, they can be serviced at a later moment in time when the vector memory instruction is replayed for the remaining and still pending memory requests.

In embodiments of the invention, the interconnect may comprise arbitration logic configured to detect and arbitrate between colliding memory requests entering or exiting the interconnect. The arbitration logic may be placed at the entry points to the first crossbar of the interconnect or at the exit points of the first crossbar. Additionally, the arbitration logic may be configured to apply the prioritization rule to the set of colliding memory requests to select at least one of the colliding memory requests that is allowed to proceed to the targeted bank of the scratchpad memory. The non-selected colliding memory requests may be filtered out by the arbitration logic. It is an advantage of embodiments that the arbitration logic can implement a very simple prioritization rule.

In some embodiments of the invention, non-prioritized memory requests of the set of colliding memory requests may be launched into the interconnect to travel through the first crossbar but are not forwarded to the targeted bank of the scratchpad memory at the exit points of the first crossbar. The arbitration logic may filter out non-prioritized memory requests of the set of colliding memory requests memory at the exit points of the first crossbar and generate return signals to the non-prioritized memory requests of the set of colliding memory requests that are sent back through the interconnect, e.g. the second crossbar, to the requesting lanes. Return signals relating to the non-prioritized memory requests of the set of colliding memory requests indicate the non-serviced condition of these memory requests, e.g. by returning a request acknowledgement as not affirmative.

In other embodiments of the invention, non-prioritized memory requests of the set of colliding memory requests may be placed into request buffers associated with the plurality of banks of the scratchpad memory. The request buffers may be part of the interconnect, e.g. a part of the first crossbar of the interconnect.

Each request buffer may be configured to act as a virtual port with respect to the non-prioritized, colliding memory requests of active thread lanes that are destined for the same corresponding bank of the scratchpad memory. Moreover, each bank of the scratchpad memory may have one physical port that can be selectively connected to one of the virtual ports by means of the arbitration logic.

In embodiments of the invention, a credit-based dispatch unit may rely on the implementation of virtual ports through request buffers. Credits are used by the dispatch unit to decide if and how many vector memory instructions can be issued to the scratchpad memory.

In embodiments, the scratchpad memory or even the fully pipelined vectorial scratchpad memory unit may have a fixed uniform access delay. This simplifies the pipeline control logic and integrations with other execution paths of the SIMT core.

In embodiments, the scratchpad memory may be further configured to generate return signals in response to memory access request signals received through the interconnect. Each return signal may indicate the completion or failure of a particular memory access operation or transaction. The return signals may be used by the frontend circuitry to decide on the retirement or replay of a vector memory instruction. An absence of an expected return signal, or a collision detection signal from the interconnect, may be interpreted as a failure of the corresponding memory access operation. In embodiments, the memory masks in the instruction buffer may be modified in accordance with the set of return signals.

In embodiments, the SIMT processor core may be configured to process instructions in accordance with an instruction pipeline, the instruction pipeline comprising at least the following stages: an instruction fetch stage, an instruction decode stage, an instruction dispatch stage, an execution stage and a writeback stage, wherein the fully pipelined vectorial scratchpad memory unit is comprised by the execution stage. This enables implementation of a typical reduced instruction set computer (RISC) pipeline augmented with the vectorial scratchpad memory unit in the execution stage.

In embodiments, the SIMT processor core may be configured to segregate an execution of the vector memory instructions into multiple phases including an address calculation phase, a request routing phase, a bank access phase and a result routing phase, wherein different ones of the multiple phases are overlapped with respect to consecutive vector memory instructions. Overlapping the phases of consecutive instructions improves throughput.

In embodiments, the SIMT processor core may have a reduced instruction set computer (RISC) architecture.

In embodiments, the frontend circuitry may comprise a dispatch unit operatively coupled to the thread-private register files of the different lanes and configured to issue, per processor core cycle, at least one instruction for thread-parallel execution on the active ones of the plurality of lanes.

In embodiments, each bank of the scratchpad memory may be multi-ported, comprising at least one read port and at least one write port, e.g. at least two read ports and at least two write ports. This allows concurrent reads and writes to each bank.

In embodiments, the frontend circuitry may comprise an instruction cache for holding instructions to be executed by the processor core, a scheduling unit and a decoder unit, the scheduling unit being configured to select at least one instruction from a pool of instructions and fetch selected instructions from the instruction cache, and the decoder unit being configured to receive and decode instructions fetched from the instruction cache.

In embodiments, the scratchpad memory may be implemented as SRAM, which guarantees fast access times.

In embodiments, the scratchpad memory may be private to the processor core. This means that the scratchpad memory does not receive memory requests stemming from other cores or memories, including cache memories of a hierarchical system memory. This avoids the contention of various competing memory access requests that would require arbitration.

In another aspect, the present invention relates to a method of operating a processor core of the SIMT type, the processor core being implemented as a stack of dies including at least a first die and a second die, said first die comprising a plurality of thread lanes, said second die comprising an arbitration-free scratchpad memory divided into a plurality of simultaneously accessible banks, there being at least as many banks as thread lanes in the processor core, the method comprising:
providing a thread-private register file per thread lane of the processor core,
determining a set of active thread lanes of the processor core, and
executing a vector memory instruction to jointly move groups of operands between the thread-private register files of the set of active thread lanes and corresponding locations in the scratchpad memory. An execution pipeline associated with the thread-parallel execution of the vector memory instruction includes performing the following pipelined sequence of steps:
   calculating an effective memory address in each of the set of active thread lanes, each effective memory address pointing to a corresponding location in the scratchpad memory,
   generating a memory access request in each of the set of active thread lanes, each memory access request including the corresponding effective memory address,
   routing non-colliding memory access requests from the set of active thread lanes through an interconnect to respective banks of the scratchpad memory,
   accessing the banks of the scratchpad memory in accordance with the memory access requests,
   returning response signals from accessed banks of the scratchpad memory through the interconnect back to the requesting thread lanes of the processor core.

In embodiments, the method may further comprise the steps of:
detecting and resolving colliding memory access requests to be routed through the interconnect,
creating and managing a memory mask with respect to each issued vector memory instruction to keep track of yet unserved memory accesses to the scratchpad memory relative to the issued vector memory instruction,
replaying the issued vector memory instruction, if two or more memory access requests to be routed through the interconnect are colliding, until all the memory accesses to the scratchpad memory tracked by the memory mask have been served successfully.

In embodiments, the step of calculating the effective memory address in each of the set of active thread lanes may comprise fetching an operand from a source register of the corresponding thread-private register file as an input for calculating the effective memory address.

In embodiments, the method may further comprise the steps of:
buffering vector memory instructions to be executed by the processor core,
dispatching, in a single core clock cycle, one or multiple buffered vector memory instructions for thread-parallel execution by the set of active thread lanes in accordance with an instruction sequencing mechanism.

In yet another aspect, the present invention relates to a processor core of the SIMT type, comprising:
a plurality of thread execution lanes,
a thread-private register file for each thread execution lane,
a vectorial scratchpad memory, VSPM, divided into a plurality of banks, there being at least as many banks as thread execution lanes in the processor core,
an interconnect to couple the thread execution lanes to respective banks of the vectorial scratchpad memory, and
a dispatch unit to issue at least one VSPM instruction for thread-parallel execution on active ones of the plurality of the thread execution lanes.
Each thread execution lane is configured to calculate an effective VSPM address and generate a VSPM request including the effective VSPM address in response to said at least one VSPM instruction. The interconnect is configured to route the VSPM requests of the different thread execution lanes to the corresponding different banks pointed by said effective VSPM addresses. The VPSM is configured to access at least one memory location in each selected bank using the effective VSPM memory addresses included in the respective memory request signals. Furthermore, the processor core is implemented as a stack of dies including at least a first die and a second die, said first die comprising the plurality of thread execution lanes, the dispatch unit and the thread-private register files, and said second die comprising the VSPM. In embodiments, the VSPM may be an arbitration-free memory unit.

In yet another aspect, the present invention relates to a pipelined processor core of the SIMT type, comprising:
a plurality of thread execution lanes arranged in an execution stage of the pipelined processor core and configured to execute instructions in lockstep,
a thread-private register file for each thread execution lane,
a vectorial scratchpad memory, VSPM, integrated into the execution stage and divided into a plurality of simultaneously accessible banks, there being at least as many banks as thread execution lanes in the pipelined processor core,
an interconnect arranged in the execution stage and located between the plurality of thread execution lanes and the VSPM,
a dispatch unit arranged in an instruction dispatch stage of the pipelined processor core and configured to issue at least one instruction per core clock cycle for thread-parallel execution on active ones of the plurality of thread execution lanes.

In embodiments, each of the plurality of thread execution lanes may be adapted to generate a memory request to access a region of the VSPM, based on an instruction pertaining to load-store operations between the thread-private register files and the VSPM.

In embodiments, an effective memory address being generated as part of the memory request may include a first portion to identify a targeted bank of said region of the VSPM and a second portion to identify an intra-bank location of said region of the VPSM.

In embodiments, the interconnect may be configured to forward the memory requests of each active thread execution lane to the corresponding targeted bank and route responses to the memory requests back to the requesting thread execution lanes.

In embodiments, the VSPM may be configured to execute the forwarded memory requests by accessing the targeted banks at the intra-bank locations identified by the respective effective memory addresses.

In embodiments, each one of the active thread execution lanes may receive the responses to the memory requests after a fixed number of core clock cycles before the instruction pertaining to load-store operations between the thread-private register files and the VSPM enters a writeback stage of the pipeline processor core, thus preventing stalling of the pipeline.

In embodiments, the processor core may be implemented as a stack of dies including at least a first die and a second die, said first die comprising the plurality of thread execution lanes, the dispatch unit and the thread-private register files, and said second die comprising the VSPM.

It is an advantage of embodiments of the invention that the occurrence of bank conflicts relative to the scratchpad memory as a shared memory resource can be reduced and resolved efficiently.

It is an advantage of embodiments of the invention that the throughput of the SIMT processor core can be increased.

It is an advantage of embodiments of the invention that register pressure, core pipeline stalls and idling time of backend functional units can be decreased for the SIMT processor core.

It is a further advantage of embodiments of the invention that the access delays related to the scratchpad memory access can be reduced.

It is an advantage of embodiments of the invention that more thread-related data can be stored on-chip, making it quickly available within and across the different threads scheduled and running on the SIMT processor core.

It is an advantage of embodiments of the invention that more thread-related data can be stored in a scratchpad memory that can be simultaneously accessed by multiple threads, thus allowing the efficient coalescing of memory requests associated with a group of threads (e.g. warp or wave).

It is an advantage of embodiments of the invention that more thread-related data can be stored in a core-private co-integrated scratchpad memory that is tightly coupled to the execution units of the core thread lanes, whereby data elements can be efficiently exchanged between the thread-private register files and the different banks of the multi-banked scratchpad memory. The transfer of data elements or operands from or to the scratchpad memory advantageously requires only a few core cycles and preferably is characterized by a fixed uniform access delay, which is beneficial for the integration of the scratchpad memory into the execution pipeline of the SIMT processor core.

It is an advantage of embodiments of the invention that the maximum access delay pertaining to a vector memory instruction such as load and store operations is limited and predictable. This enables code optimization and efficient code transformation at the compile stage.

It is an advantage of embodiments of the invention that the SIMT processor core is compatible with and supports commonly used instruction set architectures such as RISC.

It is an advantage of embodiments of the invention that bank access sequencing and/or bank conflict handling can be performed by the frontend circuitry, hence upfront the scratchpad memory, reusing existing logic from the SIMT processor core. This reduces the control logic of the scratchpad memory, eliminates the need for arbitration and allows for larger scratchpad memory capacity and an overall reduction of implementation costs.

It is an advantage of embodiments of the present invention that the partial removal or simplification of the controller for the scratchpad memory enables increased memory capacity and simplifies the hardware design.

It is an advantage of embodiments of the present invention that the in-pipeline vectorial scratchpad memory unit can be designed for fixed uniform access delay, allowing minimal pipeline control logic and optimizing instruction pipelining without stalling.

It is an advantage of embodiments of the present invention that the method for handling bank conflicts of the scratchpad memory improves memory access efficiency and avoids data hazards without introducing additional risks, as long as the program follows the basic rules of concurrent programming.

It is an advantage of embodiments of the present invention that pipeline hazards can be addressed by performing wave-level parallelism, enabling simultaneous execution of instructions from different waves and thereby improving resource utilization.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 is a block diagram of the simplified microarchitecture of a SIMT processor core according to an embodiment of the invention.
FIG. 2 is a cross-sectional view of the SIMT processor core of FIG. 1, illustrating the stacked configuration of two dies.
FIG. 3 and FIG. 4 illustrate logic blocks and associated stages of instruction pipelining for a SIMT core in accordance with embodiments of the invention.
FIG. 5 is a diagram further explaining the execution flow of vector memory operations in pipelined SIMT cores according to embodiment of the invention.
FIG. 6 illustrates execution steps related to vector memory instructions accessing the scratchpad memory in accordance with embodiments of the invention.
FIG. 7 illustrates the steps of an execution method for vector memory instruction in accordance with embodiments of the invention, in which memory access conflicts cause an instruction replay.
FIG. 8 illustrates a credit-based instruction issue mechanism, in which a request buffer is arranged in front of each bank of the scratchpad memory, which can be implemented in embodiments of the invention.

The drawings are only schematic and are non-limiting. Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but is only limited by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

As used herein, and unless otherwise specified, the term "processor core of the SIMT type" refers to a processor core that operates according to the Single Instruction Multiple Threads (SIMT) architecture, wherein multiple threads execute the same instruction simultaneously but on different data elements. This allows for parallel processing of data across multiple thread execution lanes. Examples include graphics processing units (GPUs) designed for parallel execution of the same instruction stream across multiple data threads.

As used herein, and unless otherwise specified, the term "frontend circuitry" refers to the components of the processor core responsible for fetching, decoding, and dispatching instructions to be executed by the execution units or lanes. The frontend circuitry includes units such as the instruction fetch unit, decoder unit, scheduling unit, and dispatch unit. For example, the frontend circuitry retrieves instructions from memory, decodes them into executable operations, and issues them to the appropriate execution lanes.

As used herein, and unless otherwise specified, the term "lane" refers to a thread execution lane within the processor core that is capable of executing instructions independently in a thread-parallel manner. Each lane includes its own execution units and a thread-private register file, enabling it to process data specific to its assigned thread. For example, in a processor core with multiple lanes, each lane operates on separate data elements concurrently while executing the same instruction sequence.

As used herein, the term "thread-parallel execution" refers to the concurrent execution of the same instruction by multiple thread execution lanes, where each lane operates on its own set of data. This execution model allows for parallelism at thread level, improving performance for data-parallel tasks. For example, processing elements of an array or sparse matrix in parallel, with each thread handling a different element simultaneously.

As used herein, the term "thread-private register file" refers to a set of registers exclusively accessible by a single thread execution lane, which is used to store operands, intermediate calculations, and results for that lane's operations. Each lane's thread-private register file ensures that data used by one thread is isolated from others. For example, variables and state information specific to a thread can be stored in its thread-private register file.

As used herein, the term "multi-banked and arbitration-free scratchpad memory" refers to a scratchpad memory divided into multiple independently accessible banks, where each bank can be accessed simultaneously without the need for arbitration. This means that memory access requests forwarded to the scratchpad memory are not competing. This design enables parallel memory access by multiple lanes without contention. For example, a thread-aligned scratchpad memory with as many banks as lanes allows each lane to access a distinct bank concurrently.

As used herein, and unless otherwise specified, the term "interconnect" refers to the communication network within the processor core that connects the thread execution lanes to the banks of the scratchpad memory, facilitating the transfer of data and memory access requests. The interconnect may include structures like crossbars, buses, network-on-chip components, vertical vias, and the like. For example, an interconnect network that routes memory requests from the lanes to the appropriate memory banks based on computed effective memory addresses.

As used herein, the phrase "active ones of the plurality of lanes" or "active lanes" refers to the subset of thread execution lanes that are currently enabled and participating in the execution of instructions. Lanes may be inactive due to control flow decisions such as branching or masking operations. For example, in conditional execution, only lanes processing data that meet certain criteria remain active while others are deactivated.

As used herein, the term "effective (memory) address" refers to the calculated memory address that identifies the actual location of an operand within the scratchpad memory. The effective address is computed by the address generation logic within each lane, possibly using base addresses, offsets, or index calculations as specified by the instruction. For example, computing an effective address by adding an offset to a base address stored in a register.

As used herein, the term "memory operation" refers to an operation involving the reading of data from memory, the modification of data in memory, or the writing of data to memory, such as load or store instructions. In the context of vector memory instructions, memory operations are performed in parallel by the active lanes. For example, a vector store instruction that writes data from each lane's register file to specific locations in the scratchpad memory. The vectorial nature of the "vector memory instruction" thus refers to the fact that the memory instruction concerns a group of operands stemming from the set of active thread lanes and operates on the group of operands in parallel. It does not mean that the group of operands have to be interpreted as a fixed or variably-sized data vector that can be addressed by a single memory address or register entry.

As used herein, the term "execution pipeline" refers to a series of stages through which instructions pass during processing in the processor core, allowing for overlapping of instruction execution to improve throughput. The stages may include fetching, decoding, executing, and writeback phases. For example, while one instruction is being executed, another can be decoded, and a third fetched from memory.

As used herein, the phrase "fully pipelined vectorial scratchpad memory unit" refers to an execution or collection of execution units within the processor core's pipeline dedicated to handling vector memory instructions involving the scratchpad memory, structured so that each component operates in a pipelined fashion. This design allows for continuous throughput of vector memory instructions without stalling, as different stages of multiple instructions can be processed concurrently. The vectorial scratchpad memory unit includes components such as the address generation logic, interconnect network, and scratchpad memory banks.

As used herein, the term "memory mask" refers to a data structure, such as a bitmask, associated with a vector memory instruction that indicates which lanes have pending or unserved memory accesses to the scratchpad memory. The memory mask keeps track of the completion status of memory operations initiated by the instruction. For example, a 64-bit memory mask where each bit corresponds to a lane, with a '1' indicating an unserved memory access.

As used herein, and unless otherwise specified, the term "return signals" refers to the signals sent from the scratchpad memory banks back to the requesting thread execution lanes, containing data read from memory or acknowledgments of write operations. The return signals complete the memory operations initiated by the lanes. For example, the data retrieved from a memory read operation is transmitted back to the lane via a return signal.

As used herein, the phrase "colliding memory access requests" refers to memory access requests from different thread execution lanes that target the same memory bank and cannot be served simultaneously due to the limitations in the number of accessible ports of that bank. Such collisions require detection and resolution to prevent access conflicts. For example, two lanes attempting to write to the same memory bank with only one write port in the same clock cycle would result in a collision.

As used herein, the phrase "fixed uniform access delay" refers to a consistent and equal number of core clock cycles required to complete any memory access through the vectorial scratchpad memory unit, regardless of the specific memory bank accessed or the operation performed. This ensures predictable memory operation timing and simplifies pipeline design by preventing variable latency. For example, all memory read and write operations completing after exactly three core clock cycles from the initiation of the request.

As used herein, the term "execution stage" refers to the stage in the instruction pipeline where the operations specified by the instructions are performed by the execution units. This includes arithmetic calculations, logic operations, and scratchpad memory accesses. For example, performing a multiplication operation between operands in the execution units of the active lanes.

As used herein, the term "writeback stage" refers to the stage in the instruction pipeline where the results of executed instructions are written back to the thread-private register files, making them available for subsequent instructions. For example, storing the result of an arithmetic operation or vector load command into the destination register of each active lane.

As used herein, the phrase "phases of vector memory instruction execution" refers to the sequential stages involved in executing vector memory instructions, specifically including the address calculation phase, request routing phase, bank access phase, and result routing phase. Each phase represents a portion of the instruction's processing in the pipeline, with different phases potentially overlapping for consecutive instructions. For example, while the address calculation for one instruction is occurring, the bank access for a previous instruction may be taking place.

As used herein, the term "instruction sequencing mechanism" refers to the method or logic employed by the frontend circuitry to determine the order and timing in which instructions are dispatched to the execution lanes. This mechanism handles instruction dependencies, resource availability, and control flow to optimize execution efficiency. For example, an instruction scheduler that issues instructions based on their readiness and the availability of execution units.

As used herein, the phrase "replaying the issued vector memory instruction" refers to the process of re-issuing and re-executing a vector memory instruction that was previously dispatched but had unserved or unsuccessful memory accesses due to collisions or other conflicts. The instruction is reissued to ensure that all memory operations tracked by the memory mask are eventually completed successfully. For example, issuing a vector load instruction multiple times until all active lanes have successfully loaded their data from the scratchpad memory.

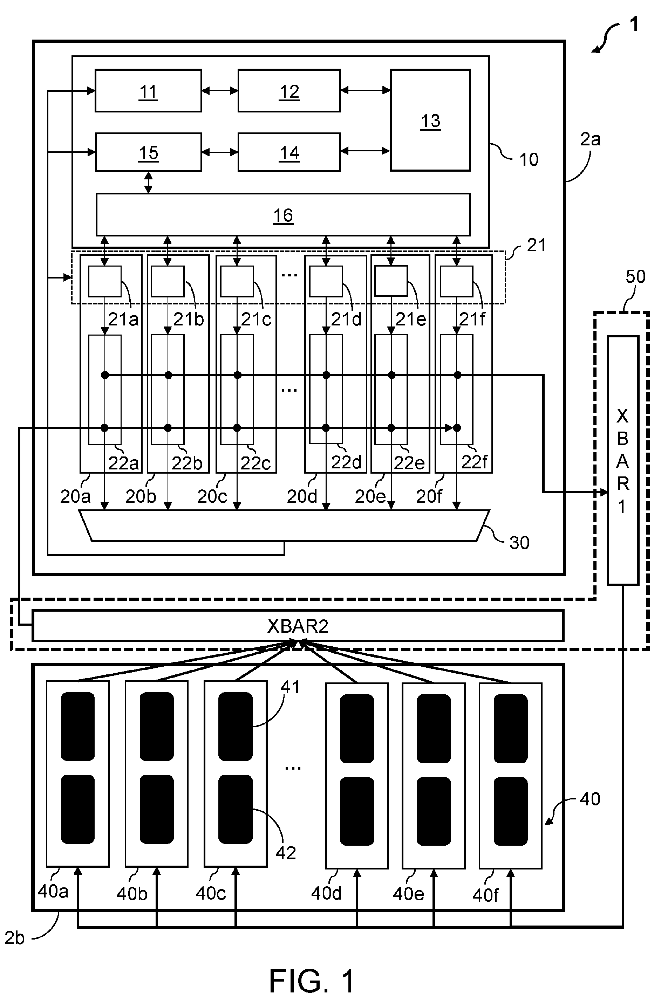

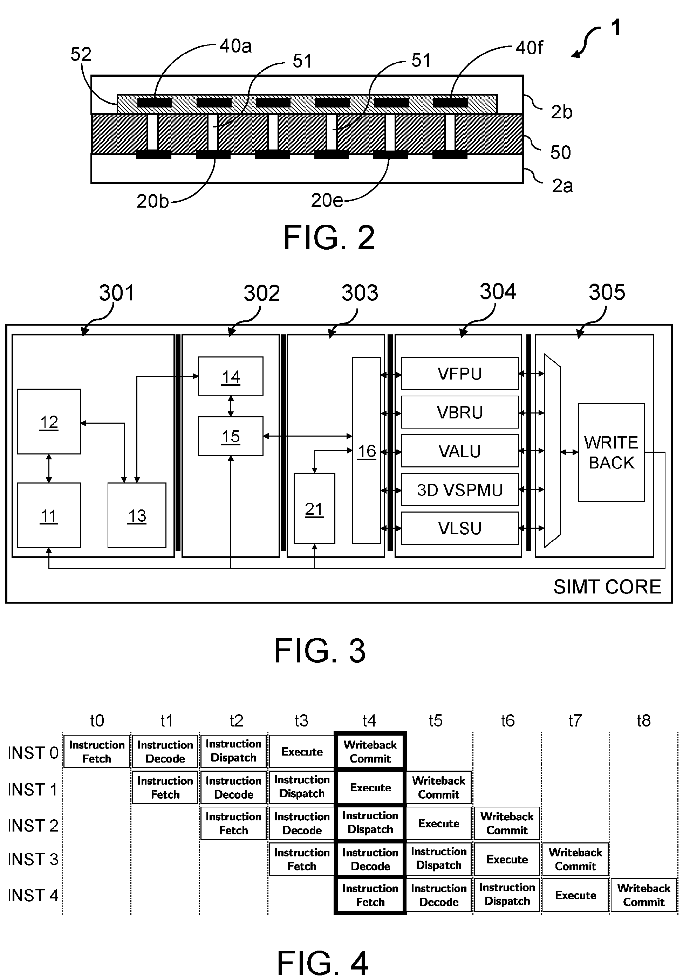

FIG. 1 is a block diagram of the simplified microarchitecture of a SIMT processor core according to an embodiment of the invention. The SIMT processor core 1 includes a logic die 2a as a first die and a memory die 2b as a second die. The logic die 2a of the SIMT core 1 contains frontend circuitry 10, a plurality of thread execution lanes 20a-f, e.g. between 16 and 64 lanes, and a writeback or commit unit 30. Each lane 20a-f has its own thread-private register file 21a-f, which is only accessible by the thread that runs on the corresponding lane, and its own address generation logic 22a-f. The individual register files 21a to 21f are isolated components of a larger register file 21 of the SIMT core 1. For instance, a register file 21 may be partitioned into the plurality of thread-private register files 21a-f. The memory die 2b contains a multi-banked scratchpad memory 40, which means that the scratchpad memory is divided into a plurality of simultaneously accessible banks 40a-f. Moreover, the scratchpad memory 40 has a thread-aligned configuration, which means that there are at least as many banks in the scratchpad memory as there are lanes in the SIMT core. The second die 2b is vertically stacked on and co-integrated with the first dies 2a. The stacked configuration of the two dies 2a, 2b is illustrated in the cross-sectional view of FIG. 2. An interconnect 50 comprises intermediate wire connections 51 between the first die 2a and the second die 2b to enable the transmission and exchange of memory signals (e.g., request signals, response signals) between the two dies. Routing circuitry 52 of the interconnect circuit 50, e.g. one or both of crossbars XBAR1 and XBAR2, may be implemented on the memory die 2b and allows each thread lane 20a-f of the first die 2a to communicate with any one of the banks 40a-f of the scratchpad memory 40 on the second die 2b. Alternatively, routing circuitry 52, e.g. one or both of crossbars XBAR1 and XBAR2, may be implemented on the logic die 2a. It is also possible to implement one part of the routing circuitry 52 on the first die 2a and another part on the second die 2b, e.g. implement one of the crossbars XBAR1 and XBAR2 on the first die and the other one of the crossbars XBAR1 and XBAR2 on the second die. In the present example, the scratchpad memory 40 is provided on a single die 2b. Nonetheless, the scratchpad memory may be provided as a stack of dies in alternative embodiments, i.e., contain or consist of several vertically stacked memory planes.

A first set of data paths through the interconnect 50 operatively connects each active thread lanes to a corresponding bank of the scratchpad memory 40 when memory requests need to be routed from the different active lanes towards the scratchpad memory in accordance with a vector memory instruction that is being executed. Similarly, a second set of data paths through the interconnect 50 operatively connects each accessed bank of the scratchpad memory 40 to the corresponding requesting lane when response/return signals need to be routed from the different accessed banks towards the set of active lanes in accordance with the vector memory instruction that is being executed. The first and second set of data paths with respect to the same underlying vector memory instruction may be established at different moments in time, e.g. separated by one or multiple core clock cycles. As explained further below, this allows pipelining of the memory access request routing phase and the memory response signal routing phase in distinct stages of an execution pipeline associated with vector memory instructions. Moreover, this allows overlapping of a memory access request routing phase and a memory response signal routing phase pertaining to two different vector memory instructions.

As illustrated in FIG. 1, each memory bank 40a-f may be subdivided into multiple sub-banks, e.g. two sub-banks 41 and 42 in the present example. This way, a uniform access delay may be obtained more easily across the many banks of the scratchpad memory.. Each memory bank 40a-f has at least one port, but preferably is multi-ported to enable concurrent read and write requests. For instance, each bank 40a-f may have two ports, e.g. one read and one write port, three ports, e.g. two read ports and one write port, or four ports, e.g. two read ports and two write ports. Multi-ported memory banks can serve several memory requests in parallel, thereby increasing the bandwidth and throughput of the scratchpad memory. A scratchpad memory with N simultaneously accessible ports per bank can serve up to N vector memory instructions in parallel per core clock cycle. Therefore, the bandwidth of the interconnect 50 is generally adapted to also support routing of up to N memory requests per thread lane and core clock cycle. However, the interconnect would still filter memory accesses in excess of N memory requests per bank and core clock cycle, thus preventing bank conflicts due to memory port limitations. Likewise, the frontend circuitry 10 of the SIMT core, e.g. a dispatch unit 16 therein, is advantageously configured to issue at most N instructions pertaining to scratchpad memory operations per core clock cycle. More specifically, the dispatch unit 16 may be configured to issue at most N1 instructions pertaining to scratchpad memory read operations per core clock cycle and at most N2 = N-N1 instructions pertaining to scratchpad memory write operations per core clock cycle, where N1 and N2 are the number of read and write ports of each bank of the scratchpad memory respectively. If access to banks or sub-banks of the scratchpad memory 40 requires more than one core clock cycle and cannot be pipelined, the dispatch unit 16 preferably implements a sequencing mechanism to space out the memory accesses to the scratchpad memory according to the bank access time.

As illustrated in FIG. 3, a wave table 11, a wave scheduler 12 and an instruction cache 13 of the frontend circuitry 10 can be assembled into an instruction fetch logic block 301. In logic block 301, the wave table 11 stores metadata regarding a pool of thread groups (e.g., waves) as status information, including information about the waves being ready to execute the next instruction of their associated instruction stream. Moreover, the program counter with respect to each wave may be stored in the wave table 11 alongside thread-related masking information, such as an active thread mask and a soft-halt mask (indicating which threads have executed a soft-halt instruction marking a reconvergence point in the program control flow). The wave scheduler 12 is configured to select waves from the wave table that are allowed to proceed, e.g. are ready to be executed. A decoder unit 14 and an instruction buffer 15 of the frontend circuitry 10 may be arranged into an instruction decode logic block 302. Decoder unit 14 is configured to fetch and decode (e.g., interpret) instructions pointed to by the program counter in the wave table entries of selected waves from the instruction cache 13. Decoded instructions can temporarily be held in the instruction buffer 15. Furthermore, a dispatch unit 16 of the frontend circuitry 10 and a register file 17 of the SITM core 1 can be logically organized into an instruction dispatch block 303. The dispatch unit 16 is configured to receive decoded instruction that are held in the instruction buffer 15, fetch the operands involved in the instruction from the register file 17, and forward the operands alongside the necessary control signals to the execution units of the thread execution lanes 20a-f. There can be scalar execution units as well as vectorial execution units within each lane 20a-f. As explained hereinbelow, vectorial execution units/functional units have duplicated hardware resources to create several lanes and handle the execution of several threads simultaneously. The execution logic block 304 refers to these various kinds of scalar and vectorial execution units that are present in the different lanes.

Typically, the thread execution lanes 20a-f, or "lanes" for short, each comprise a collection of execution units, also called functional units, which are configured to execute active threads in lockstep, i.e., each issued instruction is received by and executed by all the active lanes. Although not shown in FIG. 1, the functional units associated with each lane may comprise one or multiple algorithmic-logic units (ALU), one or multiple load-store units (LSU), one or multiple floating-point units (FPU), a branch unit (BRU), and others. When running in lockstep, the same kind of functional unit in each active lane is executing the same instruction of the instruction stream received by the SIMT core 1, but generally operates on different data elements. Therefore, it is meaningful to consider corresponding functional units of the different lanes 20a-f as the lane-wise components of a larger vectorized version. For example, the set of ALUs of the lanes 20a through 20f may be considered the lane-wise components of a vectorial algorithmic-logic unit (VALU), the set of LSUs of the lanes 20a through 20f may be considered the lane-wise components of a vectorial load-store units (VLSU), the set of FPUs of the lanes 20a through 20f may be considered the lane-wise components of a vectorial floating-point units (VFPU), the set of BRUs of the lanes 20a through 20f may be considered the lane-wise components of a vectorial branch unit (VBRU), and so forth. Writeback or commit unit 30 is arranged in a corresponding writeback or commit logic block 305. The different logic blocks 301 through 305 are separated by and synchronized via pipeline registers or clocked latches.

A fully pipelined vectorial scratchpad memory unit (VSPM) can be integrated into the instruction pipeline of SIMT core 1 by assigning, fusing, merging or joining the thread-private register files 21a-f, the address generation logic units 22a-f, the interconnect 50, and the different banks 40a-f of the scratchpad memory 40 as distinct pipeline components to a new vectorial unit. More specifically, the first crossbar switch XBAR1 and the second crossbar switch XBAR2 of the routing circuitry 52 inside the interconnect 50 may be identified with separate pipeline components of the execution pipeline. Therefore, the lane-wise components of the fully pipelined VSPM unit combines the thread-private register file of that lane, the address generating logic of that lane, a first data path through the first crossbar XBAR1, a bank of the scratchpad memory that is targeted by the thread's memory operation, and a second data path through the second crossbar XBAR2. Additional pipelined components may be arranged along the execution path of the VSPM unit. For instance, the address generation logic of each lane may include additional logic that generates memory access requests based on the calculated effective memory address. The memory access request generation logic may also inject the generated memory requests into the interconnect circuit. Alternatively, the memory access request generation logic may be provided as a distinct functional unit in each lane, between the address generation logic and the first crossbar of the interconnect. In embodiments, dedicated functional units may be provided along each lane for the address generation logic and the memory request generation logic. For example, a dedicated adder may be inserted in each lane to perform the effective address calculation, which can be combined with a dedicated load-store unit to generate the corresponding memory access requests. In alternative embodiments, existing functional units or hardware in each lane is advantageously reused to perform the effective address calculation and memory access request generation. For example, the adder of an existing ALU in each lane can be reused to perform the effective address calculation in one of its execution phases and an existing LSU can be reused for the subsequent generation of the corresponding memory access request. Bypassing of intermediate results can be enabled between the execution stage of the ALU charged with the effective address computation and the LSU of each processor core lane.

The execution pipeline that is associated with this newly composed VSPM unit, controlled by the core clock, can execute vector memory operations in lockstep for a plurality of active threads, in which each thread accesses the scratchpad memory independently at a specific location inside the scratchpad memory that is determined by an effective address calculation. Remarkably, the effective address calculation is part of the VSPM unit's execution pipeline: the address generation logic 22a-f of each lane uses one or more address-data containing operands of the corresponding thread-private register files 21a-f as inputs for the effective address calculation. The dispatch unit 16 sources these operands from the thread-private register files 21a-f to the address generating logic 22a-f in each lane.

Consequently, vector memory instructions issued by the dispatch unit 16 are executed by the VSPM unit. These vector memory instructions aim at a grouped transfer of operands between the different thread-private register files 21a-f and corresponding locations in the scratchpad memory 40, hence is compatible with and further extends the thread-level parallelism offered by the SIMT core to core-private memory operations. Groups of operands to be transferred can be designated as vectors and encompass both:
- operands in source registers of the different thread-private registers that need to be transferred to the corresponding storage location of the scratchpad memory, when vector store operations are executed, and
- operands present in storage locations of the scratchpad memory that need to be transferred to corresponding destination registers, when vector load operations are executed.
The type of transfer is represented by the memory operation, e.g. load, store or atomic memory operations, which are encoded in the vector memory instruction (e.g., the opcode portion of the instruction). Additionally, each vector memory operation specifies the operands that are targeted by the transfer to or from the scratchpad memory. Operands to be moved from the thread-private register files into the on-chip scratchpad memory are addressable by their source registers, while the effective memory addresses need to be computed to locate the individual storage locations for the different operands within the scratchpad memory. Every vector memory instruction triggers a single memory transaction that is unique for each active lane, i.e. a data movement for each lane that corresponds to a unique memory operation. Once the set of effective memory addresses has been calculated, the respective destinations of the store operation are known and a memory access request including the store command for the operand at the calculated effective memory address can be generated for each active lane. On the other hand, the source locations of operands to be moved from the on-chip scratchpad memory into the respective thread-private register files are directly addressable by their effective memory addresses, which need to be computed first. The destinations for the different operands involved in the load operation are addressable by their destination register inside the thread-private register file. Once the set of effective memory addresses has been calculated, the respective source locations of the load operation are known and a memory access request including the load command for the operand at the calculated effective memory address can be generated for each active lane. In embodiments of the invention, source or destination registers of the thread-private register files 21a-f are addressed uniformly by each memory vector instruction. This means that the same register number is used across the thread-private register files of all active thread lanes.

In embodiments of the invention, the calculation of the effective memory address usually requires address data that is present in the registers of the different thread-private register files and specified by an operand field within the vector memory instruction. For example, the address data of two source operands present in each thread-private register file needs to be added to compute the set of effective memory addresses. Alternatively, the address data of a source operand present in each thread-private register file needs to be added to an immediate value of the vector memory instruction to compute the set of effective memory addresses. In embodiments of the invention, the scratchpad memory may be byte-addressable, which means that any active thread can access any byte independently. The most significant bits of the effective memory address may then be used to represent the bank of the scratchpad memory that is targeted by the memory access operation. To ease the decoding, the capacity of a memory bank in bytes is preferably equal to a power of two. Let N be the number of slices and M the capacity of a slice in byte. The remaining bits of the effective memory address are used to describe the position of the byte to be accessed within the target bank. By way of example, for M banks of capacity C each, the leading ceil(log2(M)) bits may designate the targeted bank and the following log2(C) bits are used to locate the byte to be accessed within the target bank. Furthermore, first and second crossbars of the interconnect may be LxM crossbars in this example, where L ≤ M stands for the number of thread lanes in the SIMT core.

Regardless of the type of memory operation to be performed, the scratchpad memory is configured to generate return signals in response to memory access requests received through the interconnect. A return signal may acknowledge receipt of a memory request and include a response status, e.g. access failure or access success. The return signals also include the initially requesting lane as destination to ensure correct routing through the second crossbar (e.g. XBAR2) of the interconnect. For load operations, the return signals further include the operand that has been read at the effective memory address. The return signals may be used by the dispatch unit to decide whether the vector memory instruction has run to completion and can be retired or else requires replay. Return signals from the scratchpad memory may be routed back to the memory access request generation logic of the requesting lanes, a separate functional unit of the requesting lane, or may be routed directly to the writeback/commit unit 30.

From the preceding explanations, it is understood that the scratchpad memory provides a separate address space for thread-related data elements, which is private to the SIMT core and directly accessible by each thread via its corresponding thread-private register file. Thanks to the 3D integration of the scratchpad memory, a large memory capacity and associated address space - typically much larger than the capacity of the register file 17 of the SIMT core - can be obtained and used efficiently. This means that frequent irregular accesses into the system memory can be circumvented for which repeated cache misses and long latencies are expected that are increasingly difficult to hide by the wave pool without building up backpressure.

FIG. 4 illustrates instruction level parallelism in addition to the thread level parallelism obtained by a SIMT core in accordance with embodiment of the invention. Instruction pipelining may be implemented with respect to the different logic blocks 301 to 305 shown in FIG. 3. As a result, different instructions can be processed in parallel by the SIMT core by overlapping their pipeline stages. For instance, up to four different instructions, which may be associated with the same wave or different waves, are processed simultaneously by the SIMT core in clock cycle `t4', by overlapping the instruction fetch stage of the fourth instruction within the instruction fetch logic block 301, the instruction decode stage of the third instruction within the instruction decode logic block 302, the instruction dispatch stage of the second instruction within the instruction dispatch logic block 303, the execute stage of the first instruction within the execution logic block 304, and the writeback/commit stage of the zeroth instruction within the writeback/commit logic block 305 of the SIMT core. Vector memory instructions are executed by the fully pipelined vectorial scratchpad memory unit (VSPM) during the execute stage in FIG. 4. The pipelined SIMT core operation is compatible with commonly used instruction set architectures (ISAs) such as the RISC family. RISC instructions are uniform and hence more suitable for pipelining compared to the non-uniform instructions of varying latencies characteristic of complex instruction set computer (CISC) architectures.

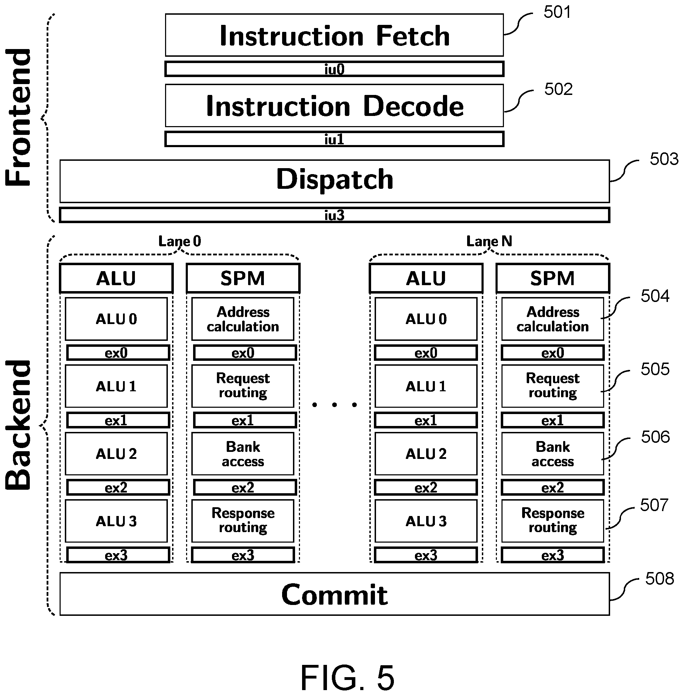

FIG. 5 further explains the execution flow of vector memory operations in pipelined SIMT cores according to embodiment of the invention. Like any other instruction, vector memory instructions are fetched from system memory into the instruction cache in the instruction fetch stage 501, decoded in the instruction decode stage 502, and then dispatched to the thread lanes in the instruction dispatch stage 503. During the address calculation stage 504, all active lanes, e.g. Lane 0 to Lane N, calculate an effective address in lockstep, according to the ISA. For instance, the effective memory addresses are each computed as the sum of two thread-private registers. Although each active thread is executing the same vector memory instruction, the resulting effective memory addresses are generally different from each other. This is because the values of the input operands to the address calculation logic of the different lanes are usually not identical, even if the vector memory instruction points to the same register numbers. Effective memory addresses are forwarded to the request generation logic, e.g. existing LSUs in each SIMT core lane, which creates the memory access request signals for the scratchpad memory access by each active lane at the computed effective address and injects them into the interconnect. Address calculation and request generation may take place in the same pipeline stage or may be split into two different pipeline stages. During the request routing stage 505, the memory access requests initiated by the different active lanes are routed through the interconnect towards the scratchpad memory banks pointed to by the effective address included in each memory access request signal. Colliding memory access requests are detected and resolved by the interconnect at the beginning of the request routing stage. During the bank access stage 506, the memory access requests from the active thread lanes are served by the scratchpad memory. The memory banks are accessed simultaneously at the storage locations indicated by the effective addresses to carry out the memory operation of the vector memory instruction, e.g. writing an operand/data element to be stored or reading an operand/data element to be loaded. Each bank access finishes with the generation of a return signal, which is routed back to the initially requesting lane during the subsequent response routing stage 507. Finally, the result of the vectorial memory operation is committed in stage 508.

Multiple instructions can be issued within the same core clock cycle to the active thread lanes if they can be assigned to different execution resources. For instance, a vector memory instruction can be executed in lockstep by Lanes 0 to N in parallel with another instruction which makes use of the ALU in each lane and involves the fine-grained execution phases ALU0 to ALU3. Each stage of the execution flow of the present example lasts a predetermined number of core clock cycles, e.g. one core clock cycle or a few core clock cycles. This means that, in the present example, results of scratchpad memory operations can be committed back to the thread-private register files in as little as four clock cycles after dispatch of the corresponding vector memory instruction. Memory access into scratchpad memory is thus handled by the vectorial scratchpad memory unit as a specialized execution unit of the SIMT core. This specialization can lead to reductions in memory access latency. Vector memory instructions run to completion in a predictable number of core clock cycles, which simplifies wave scheduling and instruction sequencing tasks. In embodiments, thread-related data can be shared among threads via the scratchpad memory, even though their register files are private and not sharable.

In embodiments of the invention, bank conflicts may still occur if active threads dynamically produce effective memory addresses that target the same bank of the scratchpad memory in the same core clock cycle and cannot be routed to different ports of this bank. Preferably, the interconnect is configured to detect and resolve such colliding memory access requests before they are routed to the scratchpad memory. The interconnect may be configured to resolve collisions in accordance with a priority scheme which grants access to one thread lane but rejects the memory requests initiated in all the other conflicting thread lanes. Therefore, only the return signal relative to the thread lane that has been granted access will be received by the writeback unit 30, in addition to the return signals to all conflict-free memory access requests. This mechanism ensures that accesses to the scratchpad memory are serialized at the bank level without requiring additional control logic. The deferred memory request can be retried in subsequent replays of the vector memory instruction until all pending memory access requests have been served successfully. One possible priority scheme is based on thread lane ID, where the interconnect allows the memory access request from the thread lane with the smallest lane ID to proceed.

To organize and achieve the replay of vector memory instructions that caused collisions among the memory request to be routed to the scratchpad memory, the instruction buffer may hold and manage a dedicated mask, e.g. SPM mask, as a data structure that tracks threads which must access to the scratchpad memory. Each entry in the instruction buffer may have an associated SPM mask. Upon launching a vector memory instruction for the first time, the instruction buffer initializes the SPM mask according to the mask of active threads. This means that the threads that must execute the instruction are also the threads for which the scratchpad memory access needs to be tracked. After bank access in the scratchpad memory, only successful threads, which have not experienced memory access request collisions, commit a response and are disabled in the SPM mask held by the instruction buffer. If the SPM mask is now empty, the instruction is removed from the instruction buffer and the corresponding mask entry is released. Otherwise, the SPM mask is not yet empty, i.e. completely disabled in all threads, and the instruction will be replayed (immediately or at a later issue cycle) by the dispatch unit for the remaining threads. The dispatch unit uses the enabled threads to propagate the instruction to the corresponding lanes only.

In embodiments of the invention, a compute kernel may be launched for execution on the SIMT processor core that is known to operate on and randomly access a specific block of data. Large computational problems often require the underlying data structure to be divided into smaller data blocks which can be dealt with more efficiently. A compiler or scheduling unit for the compute kernels may be configured to determine the exact block size at compile time or scheduling time, respectively, but prior to execution of the compute kernel on the SIMT processor core. In such cases, launching the compute kernel may cause the pre-loading of the specified data block from global memory through the cache hierarchy (e.g. including L1 data cache memories of the SIMT core) into the scratchpad memory. Data mapping from the global memory to the scratchpad memory can be optimized for the avoidance of bank conflicts. The registers of the SIMT core may be bypassed during the preloading of the data block. During execution time, the compute kernel performs random access within the preloaded data block that is held in the scratchpad memory. Data moved into the scratchpad memory preferably remains there until it is overwritten. As embodiments of the invention offer the advantage of larger storage capacities for scratchpad memory, e.g. by leveraging 3D integration to increase SRAM density integration, larger data blocks for kernel computations can be moved into the scratchpad memory at the outset of said computations, The data structure associated with large computational problems may then be divided into fewer but larger-sized data blocks, thus saving performance-degrading processing and data movements related to data block division routines.

Moreover, the 3D-integarted scratchpad memory allows for faster accesses and reduced memory latencies, which improves computational speed. In particular, the base latency for accessing the scratchpad memory compared to the global memory can be reduced. This provides a larger margin before operand starvation becomes noticeable in the case of accrued memory access conflicts.

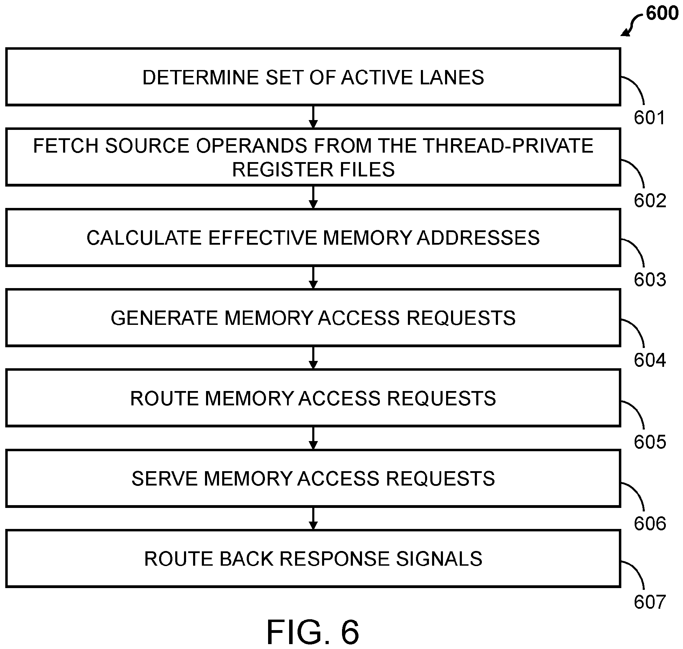

With reference to FIG. 6, steps of an exemplary method for executing vector memory instructions on the SIMT processor core in accordance with embodiments of the invention are now described. First, execution method 600 is determining the set of active thread lanes of the processor core in step 601. This information may be derived from a bit mask that is stored in the wave table of the frontend circuitry of the SIMT core. Next, a source operand specifying a base address in the scratchpad memory is fetched from the thread-private register file of each active lane in step 602. The vector memory instruction to be executed contains the register number for the source operands, which is common to all active lanes. The effective memory address for each active lane is then calculated in step 603 and a memory request for accessing the scratchpad memory at the location corresponding to the calculated effective address is generated by each lane in step 604. The effective addresses may be calculated in parallel by the address generation logic that is provided in each thread lane, e.g. ALUs of the core execution backend circuitry may be reused in each lane to compute the effective addresses. The computation of the effective address may comprise the addition of an offset value to the base address that has been fetched from the thread-private register file of each active lane. The offset value may correspond to a second source operand, also fetched from the thread-private register file of each lane, or an immediate value specified by the vector memory instruction. The memory access requests may be generated in parallel by request generation logic that is provided in each thread lane, e.g. LSUs of the core execution backend circuitry may be used in each lane to generate the memory requests. The generated memory requests include the effective memory address, the data to be moved between the scratchpad memory and the thread-private register file, and the type of memory operation as specified by the vector memory instruction (e.g. load or store operation). Atomic operations involving the scratchpad memory may be divided into a sequence of load and store operations during which the targeted memory locations inside the scratchpad memory are protected. Next, the memory requests are routed to the targeted banks, and possibly sub-banks; of the scratchpad memory in step 605. Targeted banks and sub-banks of the scratchpad memory are derived from a bit field of the effective address that is included in each memory request to be routed through the interconnect, e.g. crossbar, which connects each of the active thread lanes to a distinct bank or sub-bank of the scratchpad memory. Here, the interconnect operatively connects the thread lanes that are implemented on a first die - the logic die - to the memory banks or sub-banks of the scratchpad memory that are implemented on a second die, i.e. the memory die. The request routing step 605 also comprises the step of detecting colliding requests that target the same bank or sub-bank of the scratchpad memory and arbitrating between the colliding requests, e.g. by applying a prioritization rule such as based on thread ID. This ensures that no conflicts occur within the scratchpad memory. Hence, the scratchpad memory does not have to deal with conflicting memory access requests and can be free of arbitration logic, whereby its control logic is simplified to provide more chip area to the storage cells. Conflicting memory requests may be buffered in front of or behind the interconnect, e.g. first crossbar thereof, and serviced during a subsequent core clock cycle, or may be forwarded to the writeback stage/commit unit, where they are marked as unserved or incomplete. The group of collision-free memory requests that have been routed towards and successfully received by the targeted banks or sub-banks of the scratchpad memory are serviced during step 606. This means that the memory transactions for the routed memory access request are carried out with respect to each targeted bank or sub-bank of the scratchpad memory, i.e. the data to be moved is read from or written to the memory locations specified by the set of computed effective addresses. Next, response signals with respect to each memory access request serviced during step 606 are generated and routed back to the requesting lanes in step 607. The response signals are transferred through the interconnect, e.g. a second crossbar thereof, and may be received back by the request generation logic of the requesting lane or directly forwarded to the writeback/commit unit. In execution method 600, each of the sequential steps 601 to 607 may last for one or multiple core clock cycles.

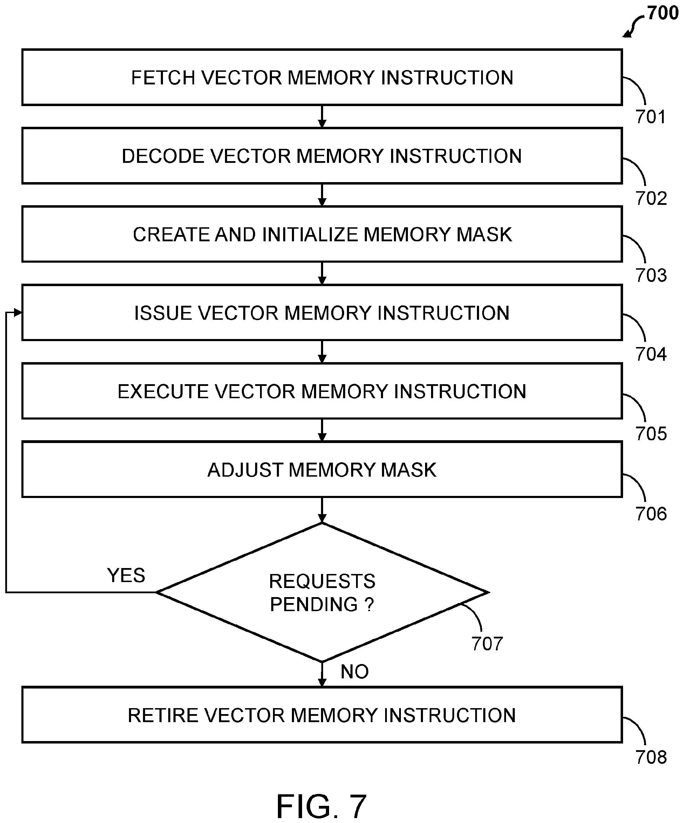

FIG. 7 illustrates an exemplary execution method 700 for vector memory instructions on the SIMT processor core in accordance with embodiments of the invention, when colliding memory accesses to the scratchpad memory exist. Typically, the vector memory instruction to be executed is associated with a wave that has been scheduled by a wave scheduler and for which an entry has been made in the wave table of the SIMT core. A stream or sequence of instructions is associated with the wave in the wave table. When the wave is ready to issue fresh instructions, e.g. the next instruction or instructions from the instruction stream or sequence, the vector memory instruction to be executed is fetched from system memory in step 701. Fetching may be done through an instruction cache of the SIMT core. In this aspect, the vector memory instruction is not different from any other kind of thread-parallel instructions. The fetched vector memory instruction is then decoded and placed into an instruction buffer during step 702. In contrast to other instructions, the decoding of the vector memory instruction is accompanied by the creation of a memory mask within the instruction buffer, which is used to track the lanes of the SIMT core that have pending memory requests. Here, pending memory requests to the scratchpad memory means that the requests have not yet been serviced or that no valid response signal has been received. The creation and initialization of the memory mask in the instruction buffer are carried out in step 703, wherein only the bits of the memory mask corresponding to active lanes are set for tracking. The set of active lanes may be determined from the bit mask entry in the wave table that represents the active/inactive state of each lane. During step 704, the vector memory instruction is dispatched to the active lanes. This happens during an instruction issue cycle of the SIMT core. This is followed by the execution of the vector memory instruction by the backend circuitry of the SIMT core during step 705. Execution step 705 may involve performing steps 601 to 607 of the embodiment of FIG. 6. Response signals obtained at the end of the execution step 705 are interpreted by the dispatch unit to adjust the memory mask in the instruction buffer when the results are committed in step 706. Memory requests of those active lanes that have been served by the scratchpad memory are marked as completed/served in the memory mask associated with the vector memory instruction. Colliding memory requests may result in unserved memory requests for a subset of the active lanes and the corresponding bits in the memory mask are not disabled as memory request tracking is still necessary for those lanes. The memory mask is checked for the existence of unserved memory requests in step 707. If all memory requests relating to the vector memory instruction have been served successfully, the vector memory instruction is retired in step 708 and the program counter for the wave that has issued the vector memory instruction is incremented to point to the next instruction. Otherwise, the vector memory instruction has to be replayed, i.e. reissued during a later instruction issue cycle, as many times as necessary to service all memory requests that are still pending with respect to the vector memory instruction. The vector memory instruction is replayed only for those lanes of which the memory requests were colliding and not prioritized to proceed to the scratchpad memory.

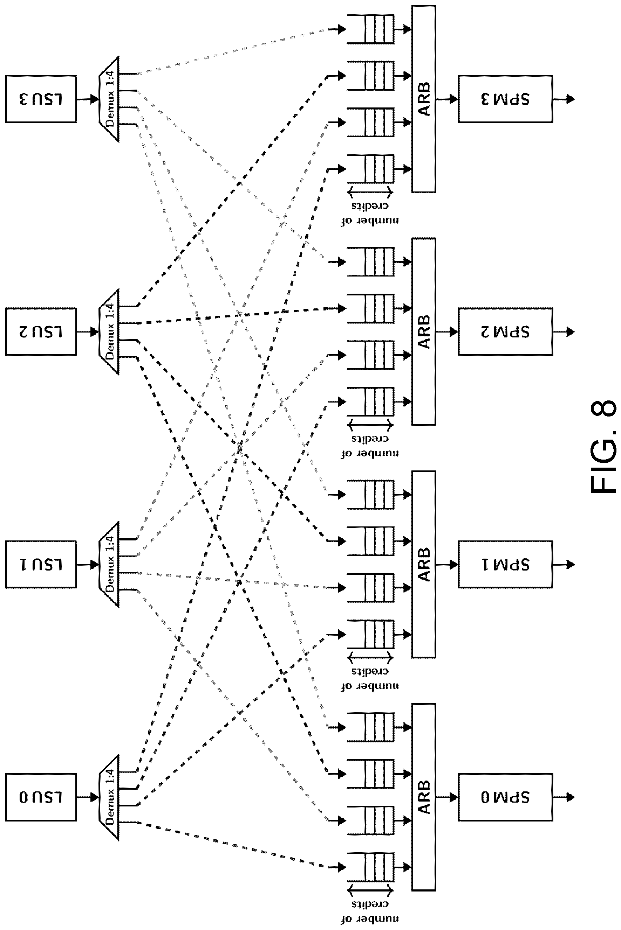

Alternatively or additionally, dispatch unit may use credits for better bank utilization. FIG. 8 illustrates a credit-based instruction issue mechanism, in which a request buffer (e.g., circular buffer or FIFO buffer) is arranged in each thread lane, e.g. in front of each bank of the scratchpad memory, and an initial credit is assigned at the reset time of the SIMT core in accordance with the request buffer capacity. The request buffers provide an interface for the access requests to the scratchpad memory, which is based on the principle of virtual ports. Each request buffer constitutes a virtual port for the corresponding scratchpad memory bank and is connected to an end point of a crossbar switch, which selectively connects the request-generating load-store units (LSUs) of each lane, LSU 0 through LSU 3, to any one of the scratchpad memory banks SPM 0 through SPM 3. This allows the buffering of non-prioritized memory access requests out of a set of colliding memory access requests to the same bank of the scratchpad memory. The arbitration logic blocks 'ARB' form an arbitration layer that is interposed between the sets of request buffers and the physical ports of the corresponding scratchpad memory banks. Each arbitration logic block 'ARB' selectively connects one of the many virtual ports to the single physical port of the respective scratchpad memory bank. Requests from the connected buffer can then proceed to the scratchpad memory bank in accordance with the available bank access bandwidth. The arbitration logic ensures fairness and is starvation-free. Before issuing a vector memory instruction, the dispatch unit first checks whether credit is remaining and then issues the vector memory instruction. If no credit is left, the dispatch unit refrains from issuing the vector memory instruction. The dispatch unit decreases the credit for each issued vector memory instruction, e.g. by one unit, and increases the credit for each completed vector memory instruction, e.g. by one unit. A credit-based dispatch unit better prevents stalls of the functional units of the SIMT core pipeline. Indeed, frequent VSPM stalls may have the tendency to keep the instruction buffer full, whereby the issuing of wave instructions to the functional units is decreased. The credit-based issuing of vector memory instructions has the advantage of preventing frequent VSPM stalls. In embodiments of the invention, in which the number of virtual ports matches the number of lanes, no filtering of colliding scratchpad memory requests (e.g. by the interconnect) before the scratchpad memory banks is required. In yet other embodiments, the capacity of the request buffers in front of each scratchpad memory bank may be limited and a hybrid solution that combines a credit-based dispatching mechanism and the detection and resolving of colliding requests to the scratchpad memory (e.g., including the replay of some vector memory instructions) may be more advantageous to implement.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. Any reference signs in the claims should not be construed as limiting the scope.

## Claims

1. A processor core (1) of the SIMT type, comprising:
frontend circuitry (10) configured for dispatching instructions to be executed by the processor core,
a plurality of lanes (20a-f) configured for thread-parallel execution of instructions issued by the frontend circuitry, each lane comprising a thread-private register file (21a-f),
a multi-banked and arbitration-free scratchpad memory (40) to store operands present in the thread-private register files, there being at least as many banks (40a-f) of the scratchpad memory as lanes in the processor core,
an interconnect (50) configured to couple active ones of the plurality of lanes to distinct banks of the scratchpad memory,
wherein each lane comprises address generation logic (22a-f) to independently calculate an effective address of an operand within the scratchpad memory in accordance with a vector memory instruction received from the frontend circuitry,
wherein the interconnect is configured to transfer groups of operands involved in the vector memory instruction between the thread-private register files of the different active lanes and corresponding locations in the scratchpad memory, pointed to by the effective addresses,
wherein the scratchpad memory banks are simultaneously accessible to perform memory operations specified by the vector memory instruction in parallel at the locations pointed to by the effective addresses,
wherein an execution pipeline of the processor core, associated with the thread-parallel execution of vector memory instructions issued by the frontend circuitry, is referred to as a fully pipelined vectorial scratchpad memory unit (VSPMU) and comprises at least the address generation logic of the different lanes, the interconnect, and the different banks of the scratchpad memory as pipeline components,
wherein the processor core is implemented as a stack of dies including at least a first die (2a) and a second die (2b), said first die comprising the frontend circuitry and the plurality of lanes, and said second die comprising the scratchpad memory.

2. The processor core (1) according to claim 1, wherein each bank of the scratchpad memory has N simultaneously accessible ports, and the interconnect (50) is configured to route at most N memory access request signals per bank and per core clock cycle.

3. The processor core (1) according to any one of the preceding claims, further comprising an instruction buffer (15) configured to manage a separate memory mask with respect to each vector memory instruction present in the instruction buffer, each memory mask keeping track of yet unserved memory accesses to the scratchpad memory.

4. The processor core (1) according to claim 3, wherein the frontend circuitry (10) is configured to issue vector memory instructions present in the instruction buffer (15) in accordance with the corresponding memory mask, including determining a set of active lanes based on the memory mask and issuing the same vector memory instruction multiple times until all the memory accesses to the scratchpad memory (40) tracked by the memory mask have been served successfully, thereby ensuring that colliding memory requests associated with the vector memory instruction are resolved.

5. The processor core (1) according to any one of the preceding claims, wherein the frontend circuitry (10) is configured to issue at most N vector memory instructions per core clock cycle, N being the number of simultaneously accessible ports within each bank (40a-f) of the scratchpad memory (40).

6. The processor core (1) according to any one of the preceding claims, wherein the frontend circuitry (10) is configured to dispatch, in a single core clock cycle, one or multiple vector memory instructions for thread-parallel execution by active ones of the processor core lanes (20a-f) in accordance with an instruction sequencing mechanism.

7. The processor core (1) according to any one of the preceding claims, each lane (20a-f) further comprising request generation logic to independently generate a request signal for accessing the scratchpad memory (40) at the effective address of an operand within the scratchpad memory in accordance with the vector memory instruction received from the frontend circuitry (10), wherein the request generation logic is another pipeline component of the fully pipelined vectorial scratchpad memory unit (VSPMU).

8. The processor core (1) according to any one of the preceding claims, the interconnect comprising a first crossbar (XBAR1) for routing memory access request signals from the different active lanes (20a-f) to the corresponding banks of the scratchpad memory (40) and a second crossbar (XBAR2) for routing return signals from accessed banks (40a-f) of the scratchpad memory to the corresponding requesting lanes, wherein the first and second crossbar are separate pipeline components of the fully pipelined vectorial scratchpad memory unit (VSPMU).

9. The processor core (1) according to any one of the preceding claims wherein the interconnect (50) is configured to detect colliding memory access requests to the scratchpad memory and apply a prioritization rule to select at least one of the colliding memory requests to be forwarded through the interconnect to the corresponding bank of the scratchpad memory.

10. The processor core (1) according to any one of the preceding claims, wherein the fully pipelined vectorial scratchpad memory unit (VSPMU) has a fixed uniform access delay.

11. The processor core (1) according to any one of the preceding claims, configured to process instructions in accordance with an instruction pipeline, the instruction pipeline comprising at least the following stages: an instruction fetch stage (301, 501), an instruction decode stage (302, 502), an instruction dispatch stage (303, 503), an execution stage (304, 504-507) and a writeback stage (305, 508), wherein the fully pipelined vectorial scratchpad memory unit (VSPMU) is comprised by the execution stage.

12. The processor core (1) according to any one of the preceding claims, configured to segregate an execution of the vector memory instructions into multiple phases including an address calculation phase (504), a request routing phase (505), a bank access phase (506) and a result routing phase (507), wherein different ones of the multiple phases are overlapped with respect to consecutive vector memory instructions.

13. A method (600, 700) of operating a processor core of the SIMT type, the processor core being implemented as a stack of dies including at least a first die and a second die, said first die comprising a plurality of thread lanes and a thread-private register file for each thread lane of said plurality of thread lanes, said second die comprising an arbitration-free scratchpad memory divided into a plurality of simultaneously accessible banks, there being at least as many banks as thread lanes in the processor core, the method comprising:
determining (601) a set of active thread lanes of the processor core, and
executing a vector memory instruction (705) to jointly move groups of operands between the thread-private register files of the set of active thread lanes and corresponding locations in the scratchpad memory,
wherein an execution pipeline associated with the thread-parallel execution of the vector memory instruction includes performing the following pipelined sequence of steps:
calculating (603) an effective memory address in each of the set of active thread lanes, each effective memory address pointing to a corresponding location in the scratchpad memory,
generating (604) a memory access request in each of the set of active thread lanes, each memory access request including the corresponding effective memory address,
routing (605) non-colliding memory access requests from the set of active thread lanes through an interconnect to respective banks of the scratchpad memory,
accessing (606) the banks of the scratchpad memory in accordance with the memory access requests,
returning (607) response signals from accessed banks of the scratchpad memory through the interconnect back to the requesting thread lanes of the processor core.

14. The method (600, 700) according to claim 13, further comprising the steps of:
detecting colliding memory access requests to be routed through the interconnect and forwarding at least one of the colliding memory requests through the interconnect to the corresponding bank of the scratchpad memory,
creating (703) and managing (706) a memory mask with respect to each issued vector memory instruction to keep track of yet unserved memory accesses to the scratchpad memory relative to the issued vector memory instruction,
replaying (708) the issued vector memory instruction, if two or more memory access requests to be routed through the interconnect are colliding, until all the memory accesses to the scratchpad memory tracked by the memory mask have been served successfully, whereby the colliding memory requests associated with the issued vector memory instruction are resolved.

15. The method (600, 700) according to any one of claims 13 to 14, further comprising the steps of:
buffering vector memory instructions to be executed by the processor core,
dispatching (704), in a single core clock cycle, one or multiple buffered vector memory instructions for thread-parallel execution by the set of active thread lanes in accordance with an instruction sequencing mechanism.
